# EUROPEAN PATENT SPECIFICATION

(11) **EP 2 792 440 B1**
(45) Date of publication and mention of the grant of the patent: **22.03.2017**
(21) Application number: 14163630.8
(22) Date of filing: 04.04.2014
(51) Int. Cl.: B23B 51/04, B23B 31/107

(54) **Quick-change attachment configuration for a hole saw**
Schnellwechselvorrichtungskonfiguration für eine Lochsäge
Configuration de fixation à changement rapide pour scie-cloche

(30) Priority: 19.04.2013 TW 102207234
(43) Date of publication of application: 22.10.2014
(73) Proprietor: Rote Mate Industry Co., Ltd., 42851 Taichung City (TW)
(72) Inventor: Lai, Ying-Tsung, 42851 Taichung City (TW)
(74) Representative: Lang, Christian

(56) References cited:
- EP-A1- 2 502 693
- EP-A2- 1 923 156
- DE-U1- 20 113 578

## Description

### BACKGROUND OF THE INVENTION

### 1. Fields of the invention

The present invention is directed to a quick-change attachment means for a hole saw, which is a tool used with a hole saw specifically used for wooden planks. The quick-change attachment means is particularly designed for coupling to a hole saw, in which the locking component and the positioning component in the quick-change attachment means can allow for faster reload of longitudinal body and detachment from the hole saw.

### 2. Descriptions of Related Art

As with the technology disclosed in Chinese Patent Application No. CN101076420A, entitled "Quick-change and Plug Eject Arbor for a Hole Saw," the quick-change attachment means used for quickly replacing drill bit shank where the quick-change attachment means can be fitted to the hole saw is coupled to the longitudinal body (which is a drill bit shank), and is locked with respect to the longitudinal body and cannot be free to rotate, and also locked axially. Because of this setup, a plug of the sawn material can be pushed out of the hole saw after a material is sawn by slidably releasing the attachment means from the longitudinal body before passing the longitudinal body through the quick-change attachment means.

The quick-change attachment means can be slidably released from the longitudinal body, and further apply a latch to slidably release the quick-change attachment means from the longitudinal body, before allowing the longitudinal body to further move into the holes. In this way, a slant terminal end of the longitudinal body can be used to push the plug out the hole saw, without needing any tool or disassembly tools.

Disadvantageously, because the latch operates by pressing from top to bottom, and an end of the latch is used as a fulcrum, a problem with the invention is that the user using the tool would have to press down and hold down the latch on another end of the fulcrum. The applied force holding on these positions may not be necessarily well-distributed, and the disproportional pressing may consequently cause the user to exert more strength than necessary in order to suppress the latch down from becoming subject to axial release. As a result the adapter would be required to be threadably coupled first to the threaded hole. A problem implicated by this structure is that the actuating of the hole saw and the longitudinal body are both handled by radial rotation, and the adapter is also subject to radial rotation when coupling, therefore it is highly possible that during operation of the driving mechanism, the anti-vibrational force can cause the threaded spots of the quick-change attachment means and the hole saw to unscrew, thereby jeopardizing the cutting process.

DE 201 13 578 U discloses a quick-change attachment configuration for a hole saw, comprising the features of the preamble of claim 1.

Accordingly, the inventor of the present invention, in an objective to resolve the above-identified shortcomings, has through improvement made in pursuit for innovative approach for problem solving, as well as relentless efforts to strive for technical progress, has for many accounts of trials, experiments with full and comprehensive conception, arrive at the present invention.

### SUMMARY OF THE INVENTION

With the quick-change attachment means for a hole saw, it is an objective of the present invention to provide a locking switch capable of reducing required applied force and capable of locking and releasing a longitudinal body. Another advantage of the present invention is that it is possible to required less number of mechanical parts for assembly, thereby decreasing construction difficulty which also preserving use safety.

The quick-change attachment configuration for a hole saw of the present invention is defined by the independent claim 1. Further preferred embodiments of the invention are defined in the dependent claims.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein:
FIG. 1 shows an exploded view of a possible embodiment of the hole saw, quick-change attachment means, and a longitudinal body for the current invention;
FIG. 2 shows an exploded view of the quick-change attachment means for a first embodiment for the current invention;
FIG. 3 shows an exploded view of the quick-change attachment means for a second embodiment for the current invention;
FIG. 4 is a cross-sectional view of the first embodiment for the current invention;
FIG. 5 is a cross-sectional view of the quick-change attachment means and the longitudinal body in a quick-change mode according to the first embodiment of the current invention;
FIG. 6 is a cross-sectional view of the quick-change attachment means and the longitudinal body in a locked mode according to the first embodiment of the current invention;
FIG. 7 is a cross-sectional view of the quick-change attachment means and the hole saw in a quick-change mode according to the first embodiment of the current invention;
FIG. 8 is a cross-sectional view of the quick-change attachment means and the hole saw in a locked mode according to the first embodiment of the current invention;
FIG. 9 is a cross-sectional view of the quick-change attachment means and the longitudinal body in a quick-change mode according to the second embodiment of the current invention;
FIG. 10 is a cross-sectional view of the quick-change attachment means and the longitudinal body in a locked mode according to the second embodiment of the current invention;
FIG. 11 is a cross-sectional view of the quick-change attachment means and the hole saw in a quick-change mode according to the third embodiment of the current invention; and
FIG. 12 is a fourth view of the quick-change attachment means and the hole saw in a locked mode according to the fourth embodiment of the current invention.

### DETAILED DESCRIPTION OF THE PREFERRED EMBODIMENT

In order to enable a person skilled in the relevant technology to practice the invention described in the specification, the objectives, technical features and effects will be further understood in connection with the Preferred Embodiments and in conjunction with the Drawings below.

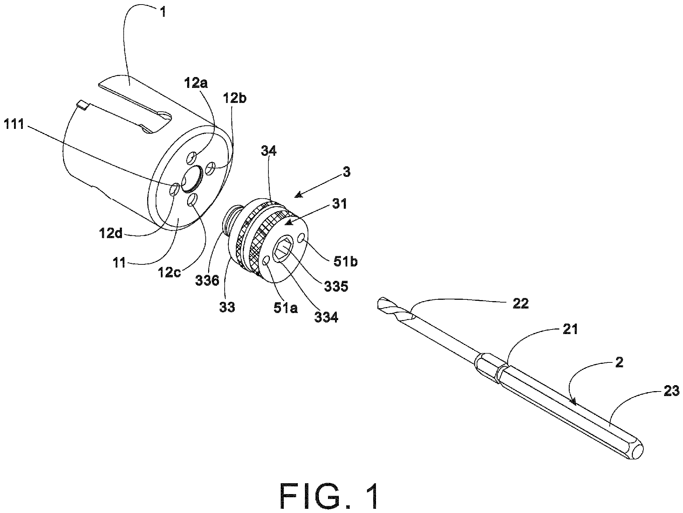

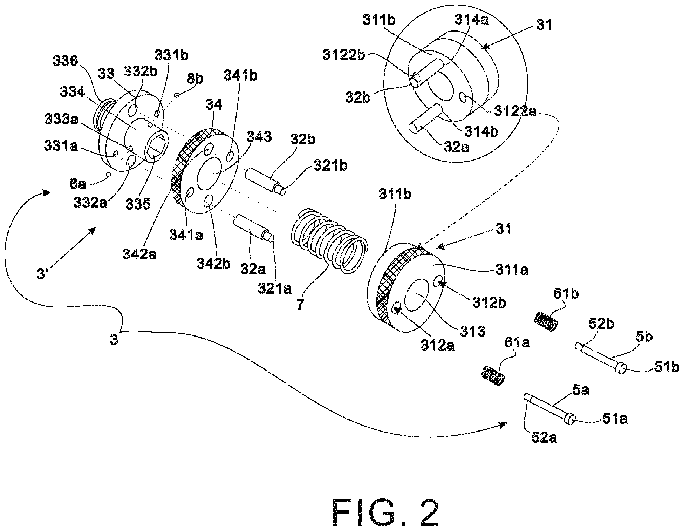

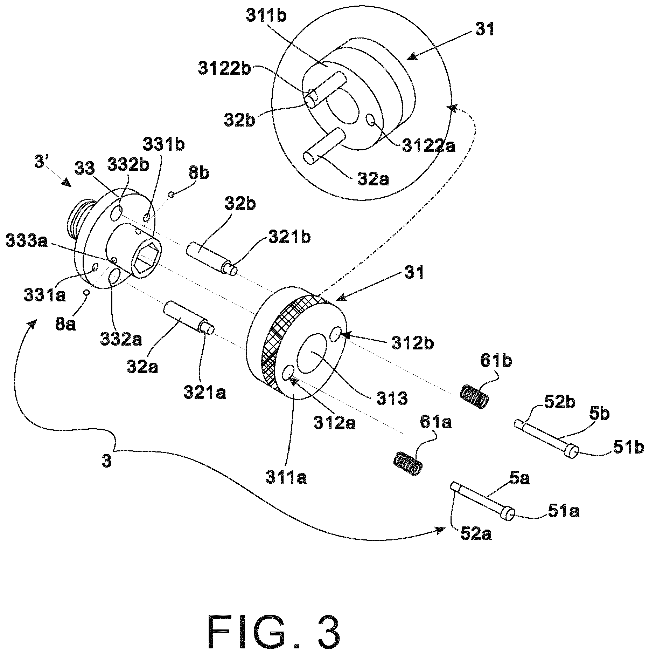

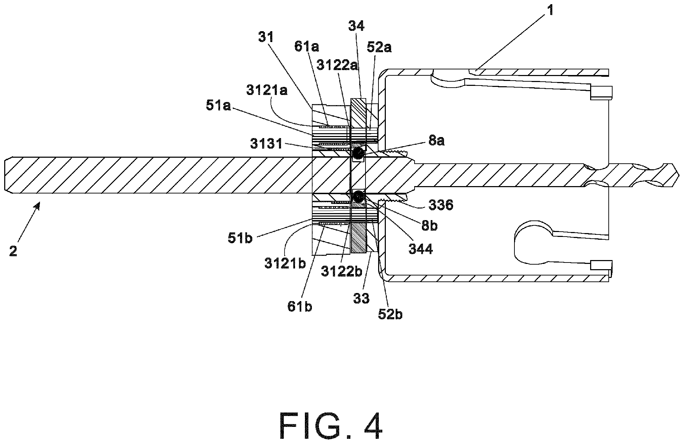

Referring now to the first embodiment illustrated in FIGS. 1 through 8, the quick-change attachment configuration for a hole saw includes a hole saw 1, a longitudinal body 2 and a quick-change attachment means a3. The hole saw 1 has a threaded aperture 111, a closed surface 11, and coupling apertures 12a, 12b, 12c, 12d. The coupling apertures 12a, 12b, 12c, 12d are each separated with each pair aligned to form a cross on the closed end 11. The threaded aperture 111 is located at he axial center of the closed end 11; further, the longitudinal body 2 is a drill bit shank, which includes a drilling end 23, a tool end 22, and a limiting portion 21, wherein the limiting portion 21 can be used to help the quick-change attachment means 3 fasten the locking component 3' and ultimately look the movement of the longitudinal body 2.

More particularly, the quick-change attachment means 3 used for assembling the longitudinal body 2 and the hole saw 1 comprises a locking component 3' and a positioning component 31. The locking component 3' comprises a first component 33 and a second component 34. The first component 33 has an axial hole 335, an attachment portion 334, a threaded portion 336, first attachment apertures 332, 332b and positioning apertures 331a, 331b. The second component 34 is a fastening component that is free to move forward and backward axially, which has a first central hole 343, second attachment holes 342a, 342b and first through holes 341a\, 341b. A portion of the outer diameter of the first central hole 343 is disposed with a curvilinear position 344.

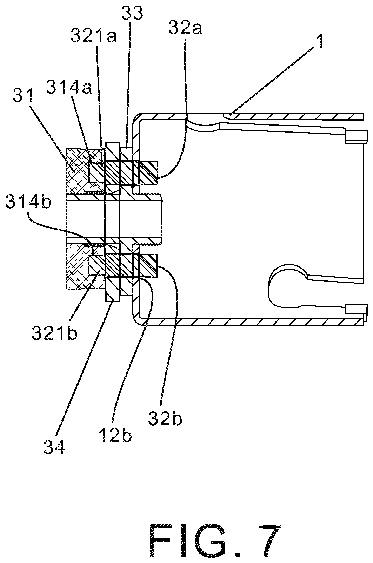

Note that the positioning component 31 has a first end surface 311a and a second end surface 311b, and a second central hole 313 receiving holes 312a, 312b and mortises 314a, 314b are interposed between the first end surface 311a and the second end surface 311b. Moreover, 314a, 314b are disposed on the second end surface 311b, for providing the connecting portions 321a, 321b of the pins 32a, 32b to be riveted to the mortises 314a, 314b. The receiving holes have first openings 3121a, 3121b, and second openings 3122a, 3122b. The inner diameter of each first openings 21211, 3121b traverses axially for a predetermined distance from one end of each second openings 3122a, 3122b. As will be understood by the illustration of FIG. 7, an end of each of the mortises 314a, 314b is an opening, the diameter of an end of each of the pins 32a, 32b slightly decreases to form connecting portions 312a, 321b. The diameter of each of the mortises 314a, 314b fits exactly with the diameters of the connecting portions 321a, 321b. By the above, the connecting portions 321a, 321b of the pins 32a, 32b are connected to the mortises 314a, 314b by a tenon and mortise joint.

As will be seen, the receiving holes 312a, 312b of the positioning component 31 can receive the actuating pins 5a, 5b. Ends of each of the actuating pins 5a, 5b are expanding portions 51a, 51b, and the other ends of each of the actuating pins are disposed with positioning portiosn 52a, 52b. After each of the actuating pins 5a, 5b pass through a spring 61a, 61b, the positioning portions 52a, 52b are inserted through the receiving holes 312a, 312b of the first openings 3121a, 3121b, pass through the second openings 3122a, 3122b, before being passed through the first through holes 341a, 341b of the second components, where they are fastened by a tenon and mortise joint to the positioning apertures 331a, 331b. The expanding portions 51a, 51b are anchored on the inclined plane of the inner diameters of the second openings 3122a, 3122b. Meanwhile, the attachment means 334 of the first component 33 pass through the first central hole 343 of the second component, and the second central ole 313 of the positioning component.

The axial hole 335 of the first component 33 is installed in the axial direction of the attachment portion 334 and extends through the threaded portion 336, the axial hole 335 has a hexagonal shape. The two ends on the radial axis of the attachment portion 334 are disposed with locking apertures 333a, 333b. The locking apertures 333a, 333b are receivable for certain retaining balls 8a, 8b. The outer-diameters of the attachment portions are slightly smaller than the outer diameters of the first central hole 3434 and the second central hole 313. Additionally, the attachmen portion 334 is jacketed by a biasing member 7 and passes through the second central hole 313 of the positioning component 31 after the attachment portion 334 passes through the first central hole of the second component 34. The jacket attachment portion is also restricted for movement by means of the blocking portion 3131 pre-established in the space defined by the inner diameter of the second central hole 313.

The threaded portion 336 is used to threadably attach and be secured to the threaded aperture 111 of the hole saw 1. The pins 32a, 32b pass through the first attachment holes 332a, 332b of the first component 33 and the second attachment holes 342a, 342b of the second component 34. After they are set up to pass through the second attachment holes 342a, 342b, they can be asserted into any pair of the coupling apertures 12a, 12b, 12c, 12d of the hole saw 1 in order to prevent the quick-change attachment means from unscrewing off from the hole saw 1 due to the radial rotation as effected by the hole saw 1.

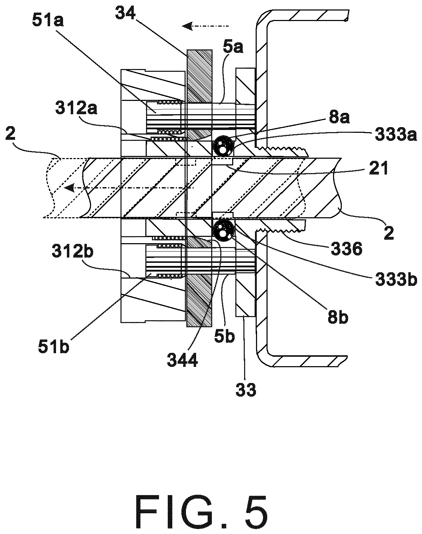

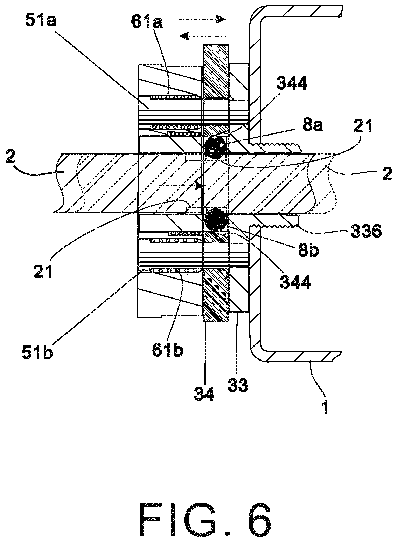

Next, the locking and quick disassembly of the longitudinal body 2 and the quick-attachment means 3 are depicted in Figures 5 and 6. The longitudinal body 2 can move radially in the axial hole 335 of the first component 3 of the quick-change attachment means 3. The components for locking the longitudinal body 2 are the set in the retaining balls disposed in the locking apertures 333a, 333b. By way of displacing the second component 34 backward in a radial direction, the longitudinal body 2 can pass through the axial hole 335 until the limiting portion 21 reach the locking apertures 333a, 333b. At this point, the second component 34 is released to allow the springs 61a, 61b housing the actuating pins 5a, 5b to return the second component 34 back to its original position, and at the same time the curvilinear portion 344 is used to push against the retaining balls 8a, 8b, which are pressed downward from the locking apertures 333a, 333b onto the limiting portion 21 of the longitudinal body 2. By way of the force applied as resulting from the springs compressed by the actuating pins 5a, 5b, the second component 34 is held to be closely attached to the first component. This leads the bottom end of the curvilinear portion 344 of the second component 34 to be tightly pressed to the retaining balls 8a, 8b. In this situation there are some areas of the retaining balls 8a, 8b that protrude out of the bottom ends the locking apertures 333a, 333b and can be held up on the limiting portion of the longitudinal body 21. This means that the longitudinal body can be securely locked on the quick-change attachment means 3.

According to an embodiment of the invention, a method for disassembling the longitudinal body 2 from the quick-change attachment means 3 are the following. One is to start by displacing the second component 34 backward in order to disattach the second component embedded into the retaining balls 8a, 8b of the limiting portion 21 of the longitudinal body 2 from the compression of the second component 34. By this approach, the retaining balls 8a, 8b would, in an opposite fashion, be pushed out of the limiting portion 21 by the surface of the outer axial handle of the limiting portion 21 of the longitudinal body 2, and pushed upward to finally return to the locking apertures. In this configuration, some areas of the retaining balls 8a, 8b protrude out of the bottom ends of the locking apertures 333a, 333b, thereby forcing the retaining balls 8a, 8b to exit out of the limiting portion 21 in order to allow the longitudinal body 2 to disattach from the quick-change attachment means 3.

The function of the actuating pins 5a, 5b is to assist in returning the second component 34 and the positioning component 31 back to its original position during their axial displacement. Because ends of the springs 61a, 61b are limited by the enlarged portions 51a, 51b after the actuating pins are housed by the springs 61a, 61b, which is meant to prevent the springs from unscrewing off the actuating pins 5a, 5b. Then the actuating pins 5a, 5b that are housed with springs 61a, 61b are inserted into receiving holes 312a, 312b. The positioning component 31 is pushed backward at the same time when the second component 34 used for operating the locking component 3' is switched between a forward and backward movement. In other more elaborated words, the actuating pins 5a, 5b located inside the receiving holes 312a, 312b can recede or return to their original position at the same time. Under the effect created by the enlarged portions 51a, 51b of the actuating pins 5a, 5b being held up in the second openings 3122a, 3122b of the receiving hole 312a, 312b, the actuating pins 5a, 5b will not be completely removed from the receiving holes 312a, 312b. Also, the actuating pins 5a, 5b and the attachment portions 334 are disposed in respective positions relative to the locking apertures 333a, 333b of the attachment portion in a parallel fashion, the upper and lower pitch length of the actuating pins 5a, 5b and the attachment portion 34 are smaller than the outer diameter of the retaining balls 8a, 8b. This arrangement is set up to block the retaining balls 8a, 8b form excessive movement, disabling the retaining balls 8a, 8b from complete detachment from the locking apertures 333a, 333b. This means the retaining balls 8a, 8b can be limited inside the locking apertures 333a, 333b. Notably, the maximum outer diameters of the retaining balls are required to be larger than the inner diameters of the lower ends of the locking apertures 333a, 333b such that the retaining balls would not break away from the lower ends of the locking apertures 333a, 333b.

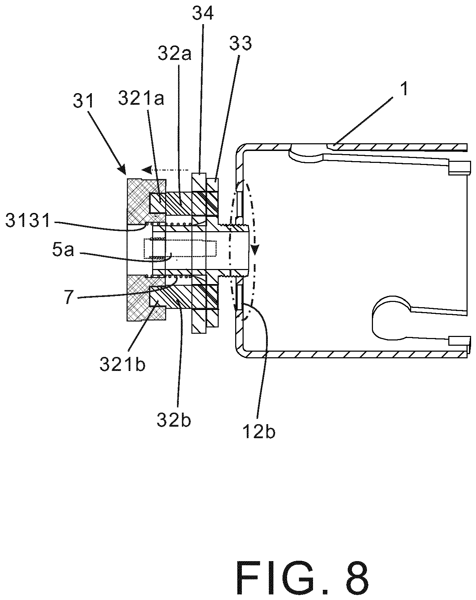

Reference is now turned to FIGS. 7 and 8 for the positioning and quick-change operation of the quick-change attachment means 3 and the hole saw 1.

The drawings here show the on and off position for an assembly of a quick-change attachment means 3 and a hole saw 1. In the current embodiment, the positioning component 31 of the quick-change attachment means 3 is pulled backward to be temporarily held in a particular position, causing the pins 32a, 32b to simultaneously move backward. At this time the biasing member 7 disposed between the positioning component 31 and the second component 34 can be set to push against the second component 34, so as to prevent the second component 34 and the positioning component 31 from moving backward. Next, the threaded portion 336 is threadably coupled to the threaded aperture 111 of the hole saw 1 until the pins 32a, 32b of the quick-change attachment means 3 are aligned with the coupling apertures 12a, 12b, 12c, 12d of the closed end 11 of the hole saw 1. After the pins 32a, 32b are aligned with the two apertures corresponding to the coupling apertures 12a, 12b, 12c, 12d, the positioning component 31 is released in order for itself to return to its original position. At this point, by way of the pins 32a, 32b returning to their positions, the pins 32a, 32b protrude and pass through the corresponding two apertures of the coupling apertures 12a, 12b, 12c, 12d so that the hole saw 1 can be prevented from unscrewing after the quick-change attachment means 3 is set to pass through the coupling apertures 12a, 12b, 12c, 12d of the hole saw 1.

Next, a walkthrough of how to operate quick-change mechanism with the quick-change attachment means 3 and the hole saw 1 will be discussed. The positioning component 31 of the quick-change attachment means 3 is pulled backward and held down in a locked position by hand, and the pins 32a, 32b are permitted to move backward such that after the pins 32a, 32b are detached from the two apertures corresponding to the coupling apertures 12a, 12b, 12c, 12d, the threaded portion 336 is rotated to be unscrewed from the threaded aperture 111 of the hole saw 1, before the held-down positioning component 31 is released in order to return to its original position, meanwhile, the corresponding pins 32a, 32b can return to their original position, the quick-change attachment means 3 is uncoupled from the hole saw 1.

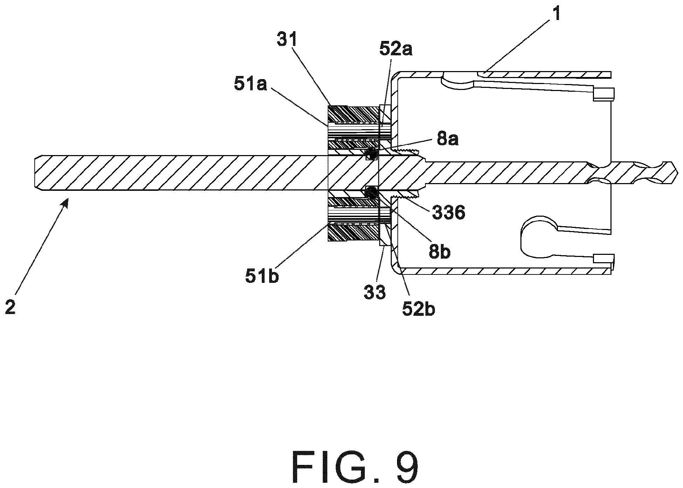

Next, as shown in FIGs. 9 through 12 which depict the second embodiment of the present invention, the quick-change attachment means 3 includes a locking component 3' and a positioning component 31, wherein the locking component 3' is the first component 33, the first component 33 has an axial hole 335, an attachment portion 334, a threaded portion 336, a first attachment holes 332a, 332b and positioning apertures 331a, 331b. The positioning component 31 has a second central hole 313, receiving holes 312a, 312b, mortises 314a, 314b, and two pins 32a, 32b. The receiving holes 312a, 312b have first openings 3121a, 3121b and second openings 3122a, 3122b. The inner diameters of the second openings 3122a, 3122b are smaller than the inner diameter of the first openings 3121a, 3121b. The width of diameters of the first openings 3121a, 3121b spans from a distance away from ends of the receiving holes 312a, 312b to terminal ends and gradually shrink to form the second openings 3122a, 3122b whose inner diameter define an inclined surface. An end of each of the mortises 314a, 314b is designed to be closed, while another end of them is designed to be open. The diameter of an end of each of the pins 32a, 32b gets slightly smaller to become connecting portion 321a, 321b. The aperture diameters of the mortises 314a, 314b fit exactly with the outer diameter of the connecting portions 321a, 321b of the pins 32a, 32b. In this way, the connecting portions 321a, 321b of the pins 32a, 32b and the mortises 314a, 314b are connected together by way of a tenon and mortise joint. The receiving holes 312a, 312b of the positioning component can be used to house actuating pins 5a, 5b, which have ends that are formed to be enlarged portions 51a, 51b. Other ends have positioning portions 52a, 52b. After the actuating pins 5a, 5b are set to house springs 61a, 61b, the positioning portions 52a, 52b are introduced through the first openings 3121a, 3121b of the receiving holes, before passed through the second openings 3122a, 3122b and secured to the positioning apertures 331a, 331b of the first component 33 by way of a tenon and mortise joint. The enlarged portions 51a, 51b are set to be held against the inclined surface defined by the inner diameter of the second openings 3122a, 3122b. The attachment portion 334 of the first component 33 passes through the second central hole 313 of the positioning component 31. The axial hole 335 of the first component 33 is disposed on the attachment portion 334 in the axial direction and extends toward the threaded portion 336. The hole of the axial hole 335 has a hexagonal shape. The attachment portion 334 has locking apertures 333a, 333b on the two ends in the radial direction. The locking apertures 333a, 333b provide for insertion of retaining balls 8a, 8b. Further, the outer diameter of the attachment portion 334 is slightly smaller than the first central hole 343 and second central hole 313, and the threaded portion 336 is threadably attached to the threaded aperture 111 of the hole saw 1.

Also, after the pins 32a, 32b pass through the first component 33 and the first attachment holes 332a, 332b pass through the second attachment holes 342a, 342b, the pins 32a, 32b can be inserted into any set of mutually corresponding apertures of the coupling apertures 12a, 12b, 12c, 12d, such that the quick-change attachment means 3 can be prevented from unscrewing from the hole saw 1 when the hole saw 1 is rotating radially.

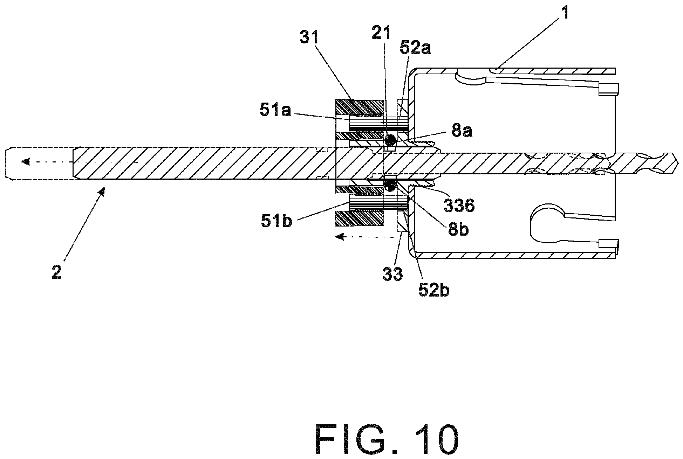

The mode of operation for the locking and quick-change mechanism with the longitudinal body and quick-change attachment means 3 in the second embodiment of the present invention will be discussed below. The longitudinal body 2 can move radially in the axial hole 335 of the first component 33 of the quick-change attachment means 3. The component for locking the longitudinal body 2 are the retaining balls 8a, 8b disposed in the locking apertures 333a, 333b of the first component 33, which, by way of the backward-moving radial displacement of the positioning component 31 as shown in FIGs. 9 and 10,the longitudinal body 2 is inserted through the axial hole 335 and extends until the limiting portion reaches the locking apertures 333a, 333b. At this point the positioning component 31 is released to let the actuating pins 5a, 5b to be housed by springs 61a, 61b in order to return the positioning component 31 back to its original position. In the meantime the curvilinear portion 344 is used to push against the retaining balls 8a, 8b. The locking apertures 333a, 333b are pressed downward into the limiting portion 21 of the longitudinal body 2, and, by the account of the forward-pushing force applied by the springs 61a, 61b on the actuating pins 5a, 5b, the positioning component 31 is closely held together with the first component 33, thereby causing the curvilinear portion 344 of the positioning component 31 to be closely held against the retaining balls 8a, 8b. At this point about half of the area of the retaining balls 8a, 8b are closely held against the limiting portion 21, so this means the longitudinal body 2 is securely fixed in the quick-change attachment means 3. The mode of operation for detaching the longitudinal body 2 from the quick-change attachment means 3 will now be described below. The positioning component 31 is pulled backward in order to detach the downwardly embedded retaining balls 8a, 8b in the limiting portion 21 of the longitudinal body 2. The retaining balls, in this configuration however, are pushed out by the outer axial handle surface of the limiting portion 21 of the longitudinal body 2 and move upward to return to the locking apertures 333a, 333b. At this point the retaining balls 8a, 8b have some areas that protrude out of the locking apertures 333a, 333b, causing the retaining balls 8a, 8b to exit the limiting portion 21 and therefore the quick-change attachment means 3.

The actuating pins 5a, 5b are used for returning the displaced positioning component 31. Because after the actuating pins 5a, 5b are housed by springs 61a, 61b, the enlarged portions 51a, 51b are set to limit particular ends of the springs 61a, 61b, thereby preventing the springs 61a, 61b from unsleeving the actuating pins 5a, 5b, inserting the actuating pins 5a, 5b housed with springs 61a, 61b into receiving holes 312a, 312b, and moving the positioning component 31 of the locking component 3' backward in a radial direction. In other words, the actuating pins 5a, 5b can simultaneously contract and return to their original position in the receiving holes 312a, 312b of the positioning component 31 at this point. Because the enlarged portions 51a, 51b of the actuating pins 5a, 5b are stuck inside the second openings 3122a, 3122b of the receiving holes 312a, 312b. Therefore the actuating pins 5a, 5b will not completely detach from the receiving holes 312a, 312b. Further, the actuating pins 5a, 5b and the attachment portion 334 are disposed in parallel with respect to each other in the locking apertures 333a, 333b of the attachment portion 334. As a result the pitch above and below the space between the actuating pins 5a, 5b and the attachment portion 334 is smaller than the width of the outer diameter of the retaining balls 8a, 8b. By way of the above, the actuating pins 5a, 5b can exactly block the retaining balls 8a, 8b. The retaining balls 8a, 8b would not completely detach from the locking apertures 333a, 333b, which means that the retaining balls 8a, 8b can be limited in the locking apertures 333a,333b.

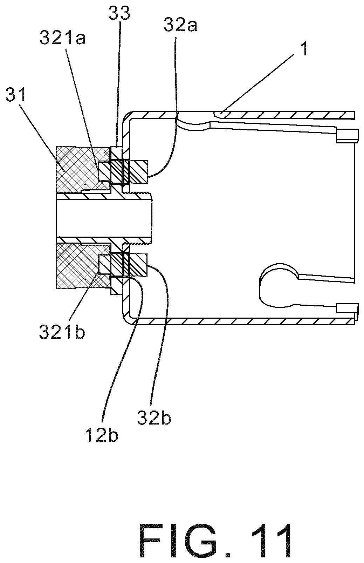

The positioning and quick-change operation with the quick-change attachment means 3 and the hole saw 1 for the second embodiment of the present invention will now be discussed with reference to FIG.11. The drawing therein shows a positioned status for the quick-change attachment means 3 and the hole saw 1. Firstly shown is the quick-change attachment means 3 and the hole saw 1 set up in an assembled status. The positioning component 31 of the quick-change attachment means 3 is pulled back to be temporarily retained in a given position, causing the pins 32a, 32b to be permitted to simultaneously move backward. Next, the threaded portion 336 is threadably attached to the threaded aperture 111 on the hole saw 1, until the pins 32a, 32b of the quick-change attachment means 3 are aligned with the coupling apertures 12a, 12b, 12c, 12d of the closed end 11 of the hole saw 1. After two corresponding apertures are aligned with, the positioning component 31 is released to return to its original position, and the mutually corresponding pins 32a, 32b are set to return to their original position. By way of returning the pins 32a, 32b back to their original positions to protrude through the mutually corresponding two apertures of the coupling apertures 12a, 12b, 12c, 12d of the hole saw 1, the quick-change attachment means 3 uses the pins 32a, 32b to pass through the coupling apertures 12a, 12b, 12c, 12d of the hole saw 1, such arrangement can stabilize positioning and prevent unscrewing as a result of driving rotation.

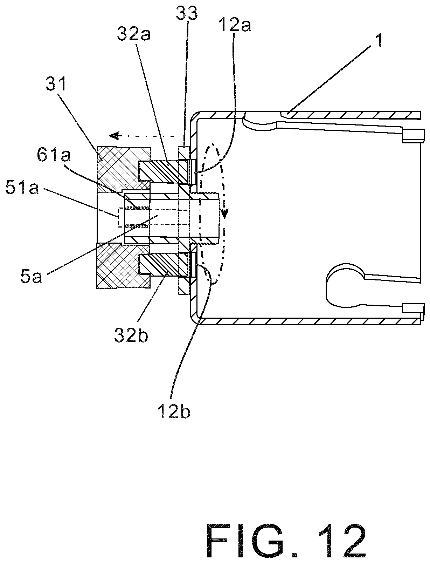

The quick-change operation with the quick-change attachment means 3 and the hole saw 1 is now described. The first step begins with pulling the positioning component 31 of the quick-change attachment means 3 backward and holding the it down by hand to temporarily stabilize the position. At the same time, the pins 32a, 32b are pulled backward. After the pins 32a, 32b detach from the mutually corresponding tow apertures of the coupling apertures 12a, 12b, 12c, 12d, the threaded portion 336 is unscrewed by way of rotation to come off from the threaded aperture 111 of the hole saw. Then the held-down positioning component 31 is released to return to their original position, at the same time, the corresponding pins 32a, 32b are relieved to their original position. The quick-change attachment means 3 is detached from the hole saw 1, as shown in FIG. 12 which shows the quick-change operation with the quick-change attachment means 3 and the hole saw 1.

By way of the above, the cross-sectional area and the corresponding outer shape of the quick-change attachment means 3 can be circular, elliptical or polygonal (examples include hexagonal or quadrilateral).

The longitudinal body 2 that may be used to assemble with the quick-change attachment means 3 can be a drill bit shank, and other tools. Examples include razors, hole saws, diamonds, polishing discs, or polishing films, brushes, tools for boring a hole, tools for grinding, or other similar tools. Such design can help create a multi-purpose tool replacement system.

## Claims

1. A quick-change attachment configuration for a hole saw (1), comprising:
a hole saw (1) having a threaded aperture (111), a closed end (11), and coupling apertures (12a, 12b, 12c, 12d);
a quick-change attachment means (3) comprising a locking component (3') and a positioning component (31); and
a longitudinal body (2) having a driving end, a tool end, and a limiting portion (21), wherein the limiting portion (21) operates to lock the quick-change attachment means (3) onto the longitudinal body (2) by the locking component (3');
**characterized in that**
the locking component (3') comprises a first component (33), in which the first component (33) has an axial hole (335), first attachment apertures (332a, 332b) and an attachment portion (334) where the attachment portion (334) is provided with locking apertures (333a, 333b) on two ends of the attachment portion (334) in a radial direction,
the locking apertures (333a, 333b) are set up to be fitted with a retaining ball (8a, 8b) kept herein in a pressed position and a released position by displacement of a second component (34) of the locking component or the positioning component (31) in an axial direction, so as to lock and release the longitudinal body (2) in a quick-change fashion, and
the positioning component (31) comprises a second central hole (313), receiving holes (312a, 312b) and mortises (314a, 314b) and has a mortise joint where two pins (32a, 32b) are disposed thereon, so that the pins (32a, 32b) operate to attach or detach the attachment means (3) onto the circular hole saw (1) by way of axial displacement of the positioning component (31).

2. The quick-change attachment configuration for a hole saw (1) according to claim 1, wherein the axial hole (335) is formed longitudinally through the attachment portion (334), and wherein the first component (33) further includes a threaded portion (336) and a positioning aperture (331a, 331b).

3. The quick-change attachment configuration for a hole saw (1) according to claim 2, wherein the threaded portion (336) is threadably attached to the threaded aperture (111) of the hole saw (1).

4. The quick-change attachment configuration for a hole saw (1) according to claim 1, wherein the second component (34) includes a first central hole (343) having a curvilinear outer diameter for an end thereof, second attachment holes (342a, 342b), and first through holes (341a, 341b) and/or wherein the positioning component (31) includes a second central hole (313), receiving holes (312a, 312b), and mortises (314a, 314b).

5. The quick-change attachment configuration for a hole saw (1) according to claim 4, wherein each of the receiving hole (312a, 312b) has first openings (3121a, 3121b) and second openings (3122a, 3122b), where an inner diameter of each second opening (3122a, 3122b) is smaller than an inner diameter of each first opening (3121a, 3121b) and/or wherein an end of each mortise (314a, 314b) is a closed surface and another end of each mortise (314a, 314b) is an opening.

6. The quick-change attachment configuration for a hole saw (1) according to claim 1, wherein an end of each pin (32a, 32b) includes an attachment portion (334), where an outer diameter of the attachment portion (334) of the pin (32a, 32b) substantially fits with an inner diameter of the mortise (314a, 314b), and is securely tenoned into the mortise (314a, 314b).

7. The quick-change attachment configuration for a hole saw (1) according to claim 1, wherein each of the receiving holes (312a, 312b) of the positioning component (31) is inserted with an actuating pin (5a, 5b), which has an expanding portion (51a, 51b) on one end and a positioning portion (52a, 52b) on another end of the actuating pin (5a, 5b), and the actuating pin (5a, 5b) is equipped with a spring (61a, 61b) and is inserted into each of the receiving holes (312a, 312b) at an end of each of the positioning portions (52a, 52b), and out of the second openings (3122a, 3122b), before passes through the first through holes (341a, 341b) of the second component (34) and is securely connected to the positioning apertures (331a, 331b) of the first component (33) by a tenon and mortise joint, and the attachment portion (334) of the first component (33) passes through the first central hole (343) of the second component (34).

8. The quick-change attachment configuration for a hole saw (1) according to claim 1, wherein the pins (32a, 32b) pass through the first attachment apertures (332a, 332b) of the first component (33) and the second attachment apertures (332a, 332b) of the second component (34), and are allowed to pass through the second attachment holes (342a, 342b) before passing through the coupling apertures (12a, 12b, 12c, 12d) to prevent the quick-change attachment means (3) from unscrewing off the safety-ensuring positioning configuration of the hole saw (1).

9. The quick-change attachment configuration for a hole saw (1) according to claim 1, wherein the longitudinal body (2) is a drill bit shank and/or wherein the longitudinal body (2) is a razor, a hole saw (1), diamond, a polishing disc or a polishing film, a brush, a tool for boring a hole, a tool for grinding, or other similar tool.

10. The quick-change attachment configuration according to claim 1, wherein each of the receiving hole (312a, 312b) has first openings (3121a, 3121b) and second openings (3122a, 3122b), where an inner diameter of each second opening (3122a, 3122b) is smaller than an inner diameter of each first opening (3121a, 3121b), and the inner diameter of each first opening (3121a, 3121b) traverses axially for a predetermined distance from one end of each second opening (3122a, 3122b) toward a distal end of each second opening (3122a, 3122b), and gradually tapers to each second opening (3122a, 3122b) having a curvilinear surface forming the inner diameter of each second opening (3122a, 3122b).

11. The quick-change attachment configuration according to claim 1, wherein an end of each of the mortise (314a, 314b) is closed and another end of each of the mortise (314a, 314b) is open, an outer diameter of an end of each of the pins (32a, 32b) slightly diminishes to form a connecting portion (321a, 321b), and a hole diameter of each of the mortise (314a, 314b) fits exactly with an outer diameter of the connecting portion (321a, 321b) of each of the pins (32a, 32b), wherein the connecting portion (321a, 321b) of each of the pins (32a, 32b) is securely connected to each of the mortise (314a, 314b) by a tenon and mortise joint.

12. The quick-change attachment configuration according to claim 1, wherein each of the receiving holes (312a, 312b) is inserted with an actuating pin (5a, 5b), which has an enlarged portion (51a, 51b) on one end of the actuating pin (5a, 5b), and a positioning portion (52a, 52b) on another end of the actuating pin (5a, 5b).

13. The quick-change attachment configuration according to claim 12, wherein the actuating pin (5a, 5b) is equipped with a spring (61a, 61b), and is inserted into each of the receiving holes (312a, 312b) through the first openings (3121a, 3121b) and passes out of the second openings (3122a, 3122b) before being securely connected to the positioning apertures (331a, 331b) of the first component (33) by way of a tenon and mortise joint.

14. The quick-change attachment configuration according to claim 13, wherein the first component (33) comprises a threaded portion (336), wherein the attachment portion (334) passes through the second central hole (313) of the positioning component (31), and the axial hole is located on the attachment portion (334) of the first component (33) and traverses toward the threaded portion (336) in an axial direction, with the axial hole (335) being preferably hexagonal.

15. The quick-change attachment configuration according to claim 1, wherein the second component (34) includes a first central hole (343) having a curvilinear outer diameter for an end thereof, wherein the outer diameter of the attachment portion (334) is slightly smaller than the first central hole (343) and the second central hole (313) and/or wherein the first component (33) comprises a threaded portion (336) which is threadably secured onto the threaded aperture (111).

## Patentansprüche

1. Schnellwechselbefestigungsanordnung für eine Lochsäge (1), umfassend:
eine Lochsäge (1) mit einer Gewindeöffnung (111), einem geschlossenen Ende (11) und Verbindungsöffnungen (12a, 12b, 12c, 12d),
ein Schnellwechselbefestigungsmittel (3), das eine Verriegelungskomponente (3') und eine Positionierkomponente (31) umfasst, und
einen longitudinalen Körper (2) mit einem Antriebsende, einem Werkzeugende und einem Begrenzungsabschnitt (21), wobei der Begrenzungsabschnitt (21) zum Sperren des Schnellwechselbefestigungsmittels (3) an dem longitudinalen Körper (2) mittels der Verriegelungskomponente (3') dient,
**dadurch gekennzeichnet, dass**
die Verriegelungskomponente (3') eine erste Komponente (33) umfasst, wobei die erste Komponente (33) eine axiale Öffnung (335), erste Befestigungsöffnungen (332a, 332b) und einen Befestigungsabschnitt (334) aufweist, wobei der Befestigungsabschnitt (334) an zwei Enden des Befestigungsabschnitts (334) in einer radialen Richtung mit Verriegelungsöffnungen (333a, 333b) versehen ist,
die Verriegelungsöffnungen (333a, 333b) passend zu einer Haltekugel (8a, 8b) ausgebildet sind, die darin in einer gedrückten Position und einer gelösten Position durch Verschieben einer zweiten Komponente (34) der Verriegelungskomponente oder der Positionierkomponente (31) in einer axialen Richtung gehalten werden kann, sodass der longitudinale Körper (2) in einer Schnellwechselweise verriegelbar und lösbar ist, und dass die Positionierkomponente (31) ein zweites Mittelloch (313), Aufnahmelöcher (312a, 312b) und Zapfenlöcher (314a, 314b) aufweist und eine Zapfenverbindung hat, wobei zwei Stifte (32a, 32b) daran angeordnet sind, sodass die Stifte (32a, 32b) mittels einer axialen Verschiebung der Positionierkomponente (31) zur Montage oder Demontage des Befestigungsmittels (3) an der kreisförmigen Lochsäge (1) betrieben werden.

2. Schnellwechselbefestigungsanordnung für eine Lochsäge (1) nach Anspruch 1, bei welcher die axiale Öffnung (335) längslaufend durch den Befestigungsabschnitt (334) ausgebildet ist, und wobei die erste Komponente (33) ferner einen Gewindeabschnitt (336) und eine Positionieröffnung (331a, 331b) beinhaltet.

3. Schnellwechselbefestigungsanordnung für eine Lochsäge (1) nach Anspruch 2, bei welcher der Gewindeabschnitt (336) durch Verschrauben an der Gewindeöffnung (111) der Lochsäge (1) angebracht ist.

4. Schnellwechselbefestigungsanordnung für eine Lochsäge (1) nach Anspruch 1, bei welcher die zweite Komponente (34) ein erstes Mittelloch (343), das einen gekrümmten Außendurchmesser an einem Ende davon hat, zweite Befestigungslöcher (342a, 342b) und erste Durchgangslöcher (341a, 341b) aufweist und/oder wobei die Positionierkomponente (31) ein zweites Mittelloch (313), Aufnahmelöcher (312a, 312b) und Zapfenlöcher (314a, 314b) umfasst.

5. Schnellwechselbefestigungsanordnung für eine Lochsäge (1) nach Anspruch 4, bei welcher jedes der Aufnahmelöcher (312a, 312b) erste Öffnungen (3121a, 3121b) und zweite Öffnungen (3122a, 3122b) hat, wobei ein Innendurchmesser von jeder zweiten Öffnung (3122a, 3122b) kleiner ist als ein Innendurchmesser von jeder ersten Öffnung (3121a, 3121b) und/oder wobei ein Ende von jedem Zapfenloch (314a, 314b) eine geschlossene Oberfläche ist und das andere Ende von jedem Zapfenloch (314a, 314b) eine Öffnung ist.

6. Schnellwechselbefestigungsanordnung für eine Lochsäge (1) nach Anspruch 1, bei welcher ein Ende von jedem Stift (32a, 32b) einen Befestigungsabschnitt (334) aufweist, wobei ein Außendurchmesser des Befestigungsabschnitts (334) des Stifts (32a, 32b) im Wesentlichen einem Innendurchmesser des Zapfenlochs (314a, 314b) entspricht und fest in dem Zapfenloch (314a, 314b) verzapft ist.

7. Schnellwechselbefestigungsanordnung für eine Lochsäge (1) nach Anspruch 1, bei welcher in jedes der Aufnahmelöcher (312a, 312b) der Positionierkomponente (31) ein Betätigungsstift (5a, 5b) eingesteckt ist, der einen Expansionsabschnitt (51a, 51b) an einem Ende und einen Positionierabschnitt (52a, 52b) an dem anderen Ende des Betätigungsstifts (5a, 5b) aufweist, und wobei der Betätigungsstift (5a, 5b) mit einer Feder (61a, 61b) versehen ist und an einem Ende von jedem der Positionierabschnitte (52a, 52b) in jeweils eines der Aufnahmelöcher (312a, 312b) eingesteckt ist und aus den zweiten Öffnungen (3122a, 3122b) heraussteht ehe er durch die ersten Durchgangslöcher (341a, 341b) der zweiten Komponente (34) hindurchgeführt wird und durch eine Schlitz- und Zapfenverbindung sicher mit den Positionieröffnungen (331a, 331b) der ersten Komponente (33) verbunden ist, und wobei der Befestigungsabschnitt (334) der ersten Komponente (33) durch das erste Mittelloch (343) der zweiten Komponente (34) hindurchgeht.

8. Schnellwechselbefestigungsanordnung für eine Lochsäge (1) nach Anspruch 1, bei welcher die Stifte (32a, 32b) durch die ersten Befestigungsöffnungen (332a, 332b) der ersten Komponente (33) und die zweiten Befestigungsöffnungen (332a, 332b) der zweiten Komponente (34) hindurchgeführt sind und ihnen ermöglicht ist, durch die zweiten Befestigungslöcher (342a, 342b) hindurch zu gehen, ehe sie durch die Verbindungsöffnungen (12a, 12b, 12c, 12d) hindurchgeführt werden, um zu verhindern, dass sich das Schnellwechselbefestigungsmittel (3) aus der sicherheitsgewährleistenden Anordnungskonfiguration der Lochsäge (1) herausschraubt.

9. Schnellwechselbefestigungsanordnung für eine Lochsäge (1) nach Anspruch 1, bei welcher der longitudinale Körper (2) ein Bohrmeißelschaft ist und/oder wobei der longitudinale Körper (2) ein Messer, eine Lochsäge (1), ein Diamant, eine Polierscheibe oder ein Polierfilm, eine Bürste, ein Werkzeug zum Bohren eines Lochs, ein Werkzeug zum Schleifen oder ein anderes vergleichbares Werkzeug ist.

10. Schnellwechselbefestigungsanordnung nach Anspruch 1, bei welcher jedes der Aufnahmelöcher (312a, 312b) erste Öffnungen (3121a, 3121b) und zweite Öffnungen (3122a, 3122b) hat, wobei ein Innendurchmesser von jeder zweiten Öffnung (3122a, 3122b) kleiner ist als ein Innendurchmesser von jeder ersten Öffnung (3121a, 3121b), und wobei der Innendurchmesser von jeder ersten Öffnung (3121a, 3121b) für einen vorgegebenen Abstand von einem Ende von jeder zweiten Öffnung (3122a, 3122b) axial in Richtung eines distalen Endes von jeder zweiten Öffnung (3122a, 3122b) verläuft und allmählich zu jeder zweiten Öffnung (3122a, 3122b) mit einer gekrümmten Oberfläche verjüngt ist, um den Innendurchmesser von jeder zweiten Öffnung (3122a, 3122b) zu bilden.

11. Schnellwechselbefestigungsanordnung nach Anspruch 1, bei welcher ein Ende von jedem Zapfenloch (314a, 314b) geschlossen ist und das andere Ende von jedem der Zapfenlöcher (314a, 314b) offen ist, wobei ein Außendurchmesser von einem Ende von jedem der Stifte (32a, 32b) zur Ausbildung eines Verbindungsabschnitts (321a, 321b) leicht reduziert ist, und wobei ein Lochdurchmesser von jedem der Zapfenlöcher (314a, 314b) genau mit einem Außendurchmesser des Verbindungsabschnitts (321a, 321b) von jedem der Stifte (32a, 32b) übereinstimmt, wobei der Verbindungsabschnitt (321a, 321b) von jedem der Stifte (32a, 32b) durch eine Schlitz- und Zapfenverbindung mit jeweils einem der Zapfenlöcher (314a, 314b) sicher verbunden ist.

12. Schnellwechselbefestigungsanordnung nach Anspruch 1, bei welcher in jedes der Aufnahmelöcher (312a, 312b) ein Betätigungsstift (5a, 5b) eingesteckt ist, welcher einen Expansionsabschnitt (51a, 51b) an einem Ende des Betätigungsstifts (5a, 5b) und einen Positionierabschnitt (52a, 52b) an dem anderen Ende des Betätigungsstifts (5a, 5b) aufweist.

13. Schnellwechselbefestigungsanordnung nach Anspruch 12, bei welcher der Betätigungsstift (5a, 5b) mit einer Feder (61a, 61b) versehen ist und durch die ersten Öffnungen (3121a, 3121b) jeweils in eines der Aufnahmelöcher (312a, 312b) eingesteckt ist und aus den zweiten Öffnungen (3122a, 3122b) heraussteht ehe er mittels einer Schlitz- und Zapfenverbindung sicher mit den Positionieröffnungen (331a, 331b) der ersten Komponente (33) verbunden wird.

14. Schnellwechselbefestigungsanordnung nach Anspruch 13, bei welcher die erste Komponente (33) einen Gewindeabschnitt (336) umfasst, wobei der Befestigungsabschnitt (334) durch das zweite Mittelloch (313) der Positionierkomponente (31) hindurchgeführt ist, und wobei sich die axiale Öffnung an dem Befestigungsabschnitt (334) der ersten Komponente (33) befindet und durch diesen in Richtung des Gewindeabschnitts (336) in einer axialen Richtung hindurchläuft, wobei die axiale Öffnung (335) vorzugsweise hexagonal ist.

15. Schnellwechselbefestigungsanordnung nach Anspruch 1, bei welcher die zweite Komponente (34) ein erstes Mittelloch (343) umfasst, das einen gekrümmten Außendurchmesser an einem Ende davon hat, wobei der Außendurchmesser des Befestigungsabschnitts (334) geringfügig kleiner ist als das erste Mittelloch (343) und das zweite Mittelloch (313) und/oder wobei die erste Komponente (33) einen Gewindeabschnitt (336) umfasst, der durch Verschrauben an der Gewindeöffnung (111) befestigt ist.

## Revendications

1. Configuration d'attache à changement rapide pour une scie cloche (1) comprenant :
une scie cloche (1) ayant une ouverture filetée (111), une extrémité fermée (11) et des ouvertures de couplage (12a, 12b, 12c, 12d) ;
un organe d'attache à changement rapide (3) comprenant un composant de verrouillage (3') et un composant de positionnement (31) et
un corps longitudinal (2) qui a une extrémité d'entraînement, une extrémité outil et une portion de limitation (21), la portion de limitation (21) fonctionnant pour verrouiller l'organe d'attache à changement rapide (3) sur le corps longitudinal (2) par le composant de verrouillage (3')
**caractérisé en ce que** le composant de verrouillage (3') comprend un premier composant (33) dans lequel le premier composant (33) a un trou axial (335), des premières ouvertures d'attache (332a, 332b) et une portion d'attache (334), la portion d'attache (334) étant pourvue d'ouvertures de verrouillage (333a, 333b) sur deux extrémités de la portion d'attache (334) dans une direction radiale, les ouvertures de verrouillage (333a, 333b) sont configurées pour être ajustées avec une bille de retenue (81, 8b) qui y est maintenue dans une position enfoncée et une position relâchée par le déplacement d'un second composant (34) du composant de verrouillage ou du composant de positionnement (31) dans une direction axiale de manière à verrouiller et débloquer le corps longitudinal (2) à la manière d'un changement rapide et le composant de positionnement (3) comprend un second trou central (313), des trous de réception (312a, 312b) et des mortaises (314a, 314b) et a un joint de mortaise sur lequel deux chevilles (32a, 32b) sont disposées si bien que les chevilles (32a, 32b) fonctionnent pour fixer ou détacher l'organe d'attache (3) sur la scie cloche circulaire (1) au moyen du déplacement axial du composant de positionnement (31).

2. Configuration d'attache à changement rapide pour une scie cloche (1) selon la revendication 1, cependant que le trou axial (335) est formé longitudinalement à travers la portion d'attache (334) et cependant que le premier composant (33) comprend de plus une portion filetée (336) et une ouverture de positionnement (331a, 331b).

3. Configuration d'attache à changement rapide pour une scie cloche (1) selon la revendication 2, cependant que la portion filetée (336) est fixée de manière filetée à l'ouverture filetée (111) de la scie à cloche (1).

4. Configuration d'attache à changement rapide pour une scie cloche (1) selon la revendication 1, cependant que le second composant (34) comprend un premier trou central (343) qui a un diamètre extérieur curviligne pour un extrémité de celui-ci, des seconds trous d'attache (342a, 342b) et des premiers trous traversants (341a, 341b) et/ou cependant que le composant de positionnement (31) comprend un second trou central (313), des trous de réception (312a, 312b) et des mortaises (314a, 314b).

5. Configuration d'attache à changement rapide pour une scie cloche (1) selon la revendication 4, cependant que chacun des trous de réception (312a, 312b) a des premières ouvertures (3121a, 3121b) et des secondes ouvertures (3122a, 3122b), un diamètre intérieur de chaque seconde ouverture (3122a, 3122b) étant plus petit qu'un diamètre intérieur de chaque première ouverture (3121a, 3121b) et/ou une extrémité de chaque mortaise (314a, 314b) étant une surface fermée et une autre extrémité de chaque mortaise (314a, 314b) étant une ouverture.

6. Configuration d'attache à changement rapide pour une scie cloche (1) selon la revendication 1, une extrémité de chaque cheville (32a, 32b) comprenant une portion d'attache (334), un diamètre extérieur de la portion d'attache (334) de la cheville (32a, 32b) étant sensiblement adapté à un diamètre intérieur de la mortaise (314a, 314b), et étant fixée de manière sûre par des tenons dans la mortaise (314a, 314b).

7. Configuration d'attache à changement rapide pour une scie cloche (1) selon la revendication 1, chacun des trous de réception (312a, 312b) du composant de positionnement (31) étant inséré avec une cheville d'actionnement (5a, 5b) qui a une portion d'expansion (51a, 51b) à une extrémité et une portion de positionnement (52a, 52b) à une autre extrémité de la cheville d'actionnement (5a, 5b) et la cheville d'actionnement (5a, 5b) étant équipée d'un ressort (61a, 61b) et étant insérée dans chacun des trous de réception (312a, 312b) à une extrémité de chacune des portions de positionnement (52a, 52b) et sortant des secondes ouvertures (3122a, 3122b) avant de traverser les premiers trous traversants (341a, 341b) du second composant (34) et étant solidement fixée aux ouvertures de positionnement (331a, 331b) du premier composant (33) par un assemblage à tenon et mortaise et la portion d'attache (334) du premier composant (33) traversant le premier trou central (343) du second composant (34).

8. Configuration d'attache à changement rapide pour une scie cloche (1) selon la revendication 1, cependant que les chevilles (32a, 32b) traversent les premières ouvertures d'attache (332a, 332b) du premier composant (33) et les secondes ouvertures d'attache (332a, 332b) du second composant (34) et sont autorisées à traverser les seconds trous d'attache (342a, 342b) avant de traverser les ouvertures de couplage (12a, 12b, 12c, 12d) pour empêcher l'organe d'attache à changement rapide (3) de se dévisser de la configuration de positionnement de sécurisation de la scie à cloche (1).

9. Configuration d'attache à changement rapide pour une scie cloche (1) selon la revendication 1, cependant que le corps longitudinal (2) est une tige de foret et/ou cependant que le corps longitudinal (2) est un rasoir, une scie à cloche (1), un diamant, un disque de polissage ou un film de polissage, une brosse, un outil pour forer un trou, un outil de meulage ou un autre outil similaire.

10. Configuration d'attache à changement rapide selon la revendication 1, cependant que chacun des trous de réception (312a, 312b) a des premières ouvertures (3121a, 3121b) et des secondes ouvertures (3122a, 3122b), un diamètre intérieur de chaque seconde ouverture (3122a, 3122b) étant plus petit qu'un diamètre intérieur de de chaque première ouverture (3121a, 3121b) et le diamètre intérieur de chaque première ouverture (3121a, 3121b) traversant axialement sur une distance prédéterminée d'une extrémité de chaque seconde ouverture (3122a, 3122b) vers une extrémité distale de chaque seconde ouverture (31221, 3122b) et s'effilant graduellement vers chaque seconde ouverture (31221, 3122b) ayant une surface curviligne qui forme le diamètre intérieur de chaque seconde ouverture (3122a, 3122b).

11. Configuration d'attache à changement rapide selon la revendication 1, cependant qu'une extrémité de chacune des mortaises (314a, 314b) est fermée et une autre extrémité de chacune des mortaises (314a, 314b) est ouverte, un diamètre extérieur d'une extrémité de chacune des chevilles (32a, 32b) diminue légèrement pour former une portion de connexion (321a, 321b) et un diamètre de trou de chacune des mortaises (314a, 314b) est exactement adapté à un diamètre extérieur de la portion de connexion (321a, 321b) de chacune des chevilles (32a, 32b), la portion de connexion (321a, 321b) de chacune des chevilles (32a, 32b) étant solidement reliée à chacune des mortaises (314a, 314b) par un assemblage à tenon et mortaise.

12. Configuration d'attache à changement rapide selon la revendication 1, cependant qu'une cheville d'actionnement (5a, 5b) qui a une portion élargie (51a, 51b) sur une extrémité de la cheville d'actionnement (5a, 5b) et une portion de positionnement (52a, 52b) à une autre extrémité de la cheville d'actionnement (5a, 5b) est insérée dans chacun des trous de réception (312a, 312b).

13. Configuration d'attache à changement rapide selon la revendication 12, cependant que la cheville d'actionnement (5a, 5b) est équipée d'un ressort (61a, 61b) et est insérée dans chacun des trous de réception (312a, 312b) à travers les premières ouvertures (3121a, 3121b) et sort des secondes ouvertures (3122a, 3122b) avant d'être solidement reliée aux ouvertures de positionnement (331a, 331b) du premier composant (33) au moyen d'un assemblage à tenon et mortaise.

14. Configuration d'attache à changement rapide pour une scie cloche (1) selon la revendication 13, cependant que le premier composant (33) comprend une portion filetée (336), la portion d'attache (334) traversant le second trou central (313) du composant de positionnement (31) et le trou axial étant situé sur la portion d'attache (334) du premier composant (33) et traversant vers la portion filetée (336) dans une direction axiale avec le trou axial (335) qui est de préférence hexagonal.

15. Configuration d'attache à changement rapide selon la revendication 1, cependant que le second composant (34) comprend un premier trou central (343) qui a un diamètre extérieur curviligne pour une extrémité de celui-ci, le diamètre extérieur de la portion d'attache (334) étant légèrement plus petit que le premier trou central (343) et le second trou central (313) et/ou le premier composant (33) comprenant une portion filetée (336) qui est fixée de manière filetée sur l'ouverture filetée (111).
